**Europäisches Patentamt**

**European Patent Office**

**Office européen des brevets**

(19)

(11) Veröffentlichungsnummer: **0 126 873**
**B1**

(12) **EUROPÄISCHE PATENTSCHRIFT**

(45) Veröffentlichungstag der Patentschrift:
25.06.86

(21) Anmeldenummer: 84102889.7

(22) Anmeldetag: **16.03.84**

(51) Int. Cl.⁴: **F 04 D 29/62,** F 04 D 29/20,
F 16 J 15/34

(54) **Dichtungseinheit.**

(30) Priorität: **18.05.83 DE 3318078**

(43) Veröffentlichungstag der Anmeldung:
**05.12.84 Patentblatt 84/49**

(45) Bekanntmachung des Hinweises auf die Patenterteilung:
**25.06.86 Patentblatt 86/26**

(84) Benannte Vertragsstaaten:
**AT FR GB IT**

(56) Entgegenhaltungen:
**DE - A - 1 453 716**
**DE - A - 2 334 959**
**DE - A - 2 729 928**
**US - A - 4 172 310**

(73) Patentinhaber: **GOETZE AG,**
**Bürgermeister-Schmidt-Strasse 17,**
**D-5093 Burscheid 1 (DE)**

(72) Erfinder: **Heinl, Werner,**
**Bürgermeister-Schmidt-Strasse 47, D-5093 Burscheid**
**(DE)**

# Beschreibung

Die Erfindung betrifft eine Dichtungseinheit, insbesondere für Flüssigkeitspumpen, bestehend aus einem über eine Nabe mit einer Welle verbindbaren Laufrad, einem mit dem Laufrad zusammenwirkenden Gegenring, einer Gleitringdichtung sowie einem alle Teile zusammenhaltenden Verbindungskörper.

Durch die DE-AS 2.729.928 ist eine Zentrifugalpumpe mit integrierter Dichtungseinheit bekannt. Ein aus Stahl oder faserverstärktem Kunststoff bestehendes Laufrad ist mit einer aus Sintermetall beziehungsweise Metall bestehenden Nabe fest verbunden. Am freien Ende der Nabe ist über einen Elastomerkörper ein Gegenring angeordnet. Vom freien Ende der Nabe ausgehend, erstreckt sich axial bis hinter die Gleitringdichtung entweder ein metallischer oder aber ein aus dem Elastomermaterial des Gegenringes herausgeformter separater Verbindungskörper. Nachteilig an einer derartigen Konstruktion ist zu sehen, dass die relativ kompakte Laufrad-Nabe-Verbindung ein relativ hohes Gewicht aufweist und somit ziemlich teuer in der Herstellung ist. Des weiteren besteht keine Möglichkeit, den in vielen Fällen aus sprödem Material, wie zum Beispiel Keramik, bestehenden Gegenring im Laufrad zu integrieren, um so eine kürzer bauende Einheit zu erhalten. Ferner ist hier ein zusätzlicher Verbindungskörper, sei er aus Elastomermaterial oder Metall, vorgesehen und zwingend erforderlich, um das Laufrad beziehungsweise die Nabe mit der Gleitringdichtung zu einer Einbaueinheit zu verbinden.

Durch die DE-A 2.623.583 ist eine Kreiselpumpe, insbesondere eine Kühlwasserpumpe für Kraftfahrzeuge, bekannt. Hier sind Gleitringdichtung, Laufrad und Gegenring zu einer Einbaueinheit zusammengefasst, dergestalt, dass die Gleitringdichtung ein den Gegenring mit umfassendes Gehäuse aufweist und der Gegenring über einen Elastomerkörper fest mit dem Laufrad verbunden ist. Das aus Metall bestehende Laufrad ist auch hier nicht in der Lage, einen aus sprödem Material bestehenden Gegenring unmittelbar ohne Zwischenschaltung einer elastomeren Schicht aufzunehmen. Des weiteren ist auch hier ein separates Verbindungsteil vonnöten, um zu einer Einbaueinheit zu gelangen.

Der Erfindung liegt die Aufgabe zugrunde, eine Dichtungseinheit so auszubilden, dass mit möglichst wenigen Teilen eine relativ leichte und kompakte Einbaueinheit geschaffen wird, wobei zur Reduzierung der axialen Baulänge unter anderem ein aus sprödem Material bestehender Gegenring vom Laufrad, selbst unter extremen Betriebszuständen nicht zerstörbar, aufgenommen werden kann.

Diese Aufgabe wird erfindungsgemäss dadurch gelöst, dass der Verbindungskörper einstückig aus dem Material des Laufrades herausgeformt ist. Aus Gewichtsgründen bietet sich hier ein Laufrad aus einem Elastomermaterial, Hartgummi- beziehungsweise Kunststoff an, wobei natürlich Leichtmetalle, wie Aluminium oder dergleichen, die gegebenenfalls mit einer Elastomerschicht überzogen sind, ebenfalls eingesetzt werden können. Durch diese Massnahme wird im Gegensatz zum Stand der Technik eine relativ leichte und vor allen Dingen kostengünstig herzustellende Dichtungseinheit geschaffen. Besteht die axiale Verbindung aus einem Elastomermaterial, so kann der Gegenring gegebenenfalls über ein Wellenprofil darin eingebettet werden und ist somit ohne weitere Bauteile elastisch gelagert.

Eine Vielzahl von Arretierungsmöglichkeiten bietet sich an, um die Gleitringdichtung während Transport und Montage unverlierbar mit dem Laufrad zu verbinden. Eine bevorzugte Variante wird darin gesehen, den Verbindungskörper axial bis hinter die Gleitringdichtung zu verlängern und im Bereich seines freien Endes mindestens einen vorzugsweise umlaufenden Wulst vorzusehen. Somit wird auf einfache Weise eine Schnappverbindung hergestellt.

Einem weiteren Gedanken der Erfindung gemäss, ist die das Laufrad stützende Nabe im Bereich des axial verlängerten Verbindungskörpers mit einem stufenförmig vom Durchmesser her sich vergrössernden Absatz zu versehen. Dieses ist dann bevorzugt von dem Elastomermaterial des Laufrades oder Verbindungskörpers aus Korrosionsgründen vollständig umgeben. Die Abstufung weist darüber hinaus noch den Vorteil auf, dass hier eine bessere Anbindung des Elastomermateriales an das Metallteil durch die Vergrösserung der Anbindungsfläche stattfinden kann.

Zwecks besserer Verklammerung des Elastomermateriales an den vom Durchmesser her grösseren Axialschenkel der Nabe wird vorgeschlagen, diesen Bereich mit axial oder geneigt dazu verlaufenden Einschnitten zu versehen. Ebenfalls denkbar sind runde beziehungsweise ovale Ausnehmungen.

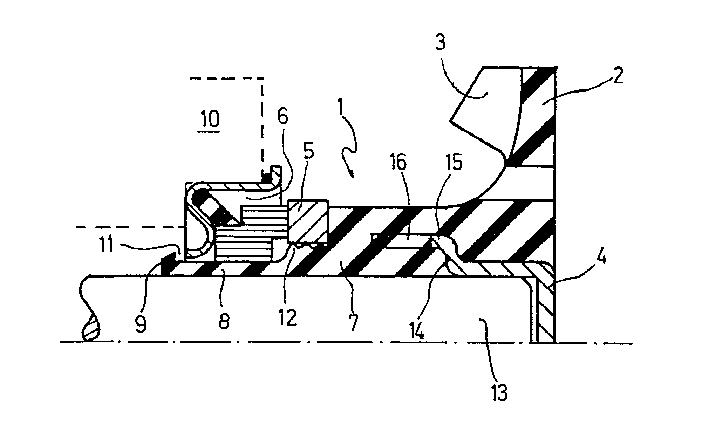

Die Erfindung ist in der Zeichnung dargestellt und wird im folgenden näher beschrieben:

Dargestellt ist eine Dichtungseinheit 1 in nur angedeuteter Einbaulage. Die Dichtungseinheit besteht aus einem Laufrad 2 aus elastomerem Material mit gleitringseitiger Beaufschlagung 3, einer metallischen Nabe 4, einem Gegenring 5 sowie einer Gleitringdichtung 6. Erfindungsgemäss ist axial aus dem elastomeren Material des Laufrades 2 ein Verbindungskörper 7 einstückig herausgeformt, der sich axial bis hinter die Gleitringdichtung 6 erstreckt. Im Bereich seines freien Endes 8 ist ein umlaufender Wulst 9 vorgesehen, an dem die Gleitringdichtung 6 während Transport und Montage anliegt. Im Einbauzustand, das heisst wenn die Gleitringdichtung 6 im Gehäuse 10 eingepresst ist, entsteht dadurch ein axialer Spalt 11, so dass die Gleitringdichtung 6 freilaufen kann. Der Keramik-Gegenring 5 ist elastisch über ein Wellenprofil 12 auf der Verlängerung des Verbindungskörpers 7 aufgehängt. Im Einbauzustand sitzt die Dichtungseinheit 1 auf einer Welle 13 auf, wobei das Laufrad 2 über die Nabe 4 drehfest mit derselben verbunden ist. Zur Beherrschung der Kräfte (Drehmoment) im Betriebszustand ist die Nabe 4 abgestuft 14 ausgebildet. Bei der Herstellung wird somit eine grössere Anbindungsfläche für das Elastomermaterial gebildet. Ferner ist der auf einem grösseren Durchmesser als die Nabe 4 angeordnete Axialschenkel 15 mit Einschnitten 16 versehen, um so eine bessere Verklammerung des Elastomermateriales zu erzielen.

### Patentansprüche

1. Dichtungseinheit, insbesondere für Flüssigkeitspumpen, betehend aus einem über eine Nabe (4) mit einer Welle (13) verbindbaren Laufrad (2), einem mit dem Laufrad (2) zusammenwirkenden Gegenring (5), einer Gleitringdichtung (6) sowie einem alle Teile axial zusammenhaltenden, im Bereich einer Umfangsfläche der Dichtungseinheit angeordneten Verbindungskörper (7), dadurch gekennzeichnet, dass der Verbindungskörper (7) einstückig aus dem vorzugsweise elastomeren Material des Laufrades (2) herausgeformt ist.

2. Dichtungseinheit nach Anspruch 1, dadurch gekennzeichnet, dass sich der Verbindungskörper (7) axial bis hinter die Gleitringdichtung (6) erstreckt.

3. Dichtungseinheit nach den Ansprüchen 1 und 2, dadurch gekennzeichnet, dass der Verbindungskörper (7) im Bereich seines freien Endes (8) mit mindestens einem in Richtung auf die Gleitringdichtung (6) weisenden, gegebenenfalls umlaufenden Wulst (9) versehen ist.

4. Dichtungseinheit nach den Ansprüchen 1 bis 3, dadurch gekennzeichnet, dass die Nabe (4) im Bereich des axialen Verbindungskörpers (7) ein etwa stufenförmiges Profil (14) aufweist.

5. Dichtungseinheit nach den Ansprüchen 1 bis 4, dadurch gekennzeichnet, dass die Abstufung (14) einen grösseren Durchmesser als der Umfang der Nabe (4) aufweist.

6. Dichtungseinheit nach den Ansprüchen 1 bis 5, dadurch gekennzeichnet, dass der abgestufte Teil (14, 15) der Nabe (4) vollständig vom Material des Laufrades (2) beziehungsweise des Verbindungskörpers (7) umgeben ist.

7. Dichtungseinheit nach den Ansprüchen 1 bis 6, dadurch gekennzeichnet, dass das freie Ende (15) der Nabe (4) mit axial oder geneigt dazu verlaufenden Einschnitten (16) versehen ist.

### Claims

1. Seal unit, especially for liquid pumps, consisting of an impeller capable of being connected to a shaft via a hub, a counter-ring interacting with the impeller, a mechanical face seal, and a connecting element located in the region of one circumferential surface of the mechanical face seal and holding all the parts together axially, characterized by the fact the connecting element (7) is formed in one piece out of the preferably elastomeric material of the impeller (2).

2. Seal unit according to Claim 1, characterized by the fact that the connecting element (7) extends axially beyond the mechanical face seal (6).

3. Seal unit according to Claims 1 and 2, characterized by the fact that in the region of the free end (8) of the connecting element (7) there is at least one bead (9) directed towards the mechanical face seal (6) and if necessary extending all the way round.

4. Seal unit according to Claims 1 to 3, characterized by the fact that the hub (4) has a step-like profile (14) in the region of the axial connecting element (7).

5. Seal unit according to Claims 1 to 4, characterized by the fact that the step (14) has a larger diameter than the circumference of the hub (4).

6. Seal unit according to Claims 1 to 5, characterized by the fact that the stepped part (14, 15) of the hub (4) is entirely enclosed by the material of the impeller (2) and connecting element (7).

7. Seal unit according to Claims 1 to 6, characterized by the fact that the free end (15) of the hub (4) has slits (16) running in axial direction or at an incline thereto.

### Revendications

1. Unité de joint d'étanchéité utilisée principalement pour pompes à liquides, qui se compose des éléments d'assemblage suivants: Une roue mobile combinable avec un arbre tournant par l'intermédiaire d'un moyeu, une contre-bague fonctionnant en action réciproque avec la roue mobile, un joint axial et un membre de jonction disposé dans la surface circonférentielle de l'unité de joint d'étanchéité avec le but de retenir tous les éléments d'assemblage en direction axiale, l'unité étant caractérisée par le fait que le membre de jonction (7) est façonné d'une seule pièce dans la matière préférentiellement élastomère de la roue mobile (2).

2. Unité de joint d'étanchéité selon la revendication 1, caractérisée par le fait que le membre de jonction (7) s'étend jusqu'à l'arrière du joint axial (6).

3. Unité de joint d'étanchéité selon les revendications 1 et 2, caractérisée par le fait que le membre de jonction (7) est pourvu d'un bourrelet (9) au minimum dans la zone de son extrémité dégagée (8), ce bourrelet étant disposé le cas échéant en périphérie avec l'orientation vers le joint axial (6).

4. Unité de joint d'étanchéité selon les revendications 1 à 3, caractérisée par le fait que le moyeu (4) présente à peu près un profil à gradins (14) dans la zone du membre de jonction axial (7).

5. Unité de joint d'étanchéité selon les revendications 1 à 4, caractérisée par le fait que la gradation (14) possède un diamètre qui est plus grand que la circonférence du moyeu (4).

6. Unité de joint d'étanchéité selon les revendications 1 à 5, caractérisée par le fait que la partie graduée (14, 15) du moyeu (4) est entièrement entourée par la matière de la roue mobile (2) et du membre de jonction (7) respectivement.

7. Unité de joint d'étanchéité selon les revendications 1 à 6, caractérisée par le fait que l'extrémité dégagée (15) du moyeu (4) est pourvue d'entailles (16) disposées en tracé axial ou incliné.